# EUROPÄISCHE PATENTANMELDUNG

(11) **EP 1 589 259 A2**
(43) Veröffentlichungstag der Anmeldung: **26.10.2005**
(21) Anmeldenummer: 05006709.9
(22) Anmeldetag: 29.03.2005
(51) Int. Cl.: F16H 29/14

(54) **Getriebe mit stufenlos einstellbarer Übersetzung**

(30) Priorität: 28.03.2004 DE 102004015512; 18.08.2004 DE 102004040102; 14.09.2004 DE 102004044920
(71) Anmelder: Kobler, Peter, 93059 Regensburg (DE)
(72) Erfinder: Kobler, Peter, 93059 Regensburg (DE)
(74) Vertreter: Benninger, Johannes

(57) **Zusammenfassung**

Die Erfindung betrifft ein Getriebe (8), umfassend einen oszillierenden oder rotierenden Antrieb (10, 11), eine rotierende Abtriebswelle (40) und einen zwischen diesen Mechanismen bzw. Wellen (10, 11) angeordneten Wirkmechanismus, der eine Umsetzung der Oszillation des Antriebsmechanismus (11) bzw. einer Rotation einer Antriebswelle (10) in eine translatorische Bewegung wenigstens einer Koppelstange (14 bzw. 20) und/oder eines Schwenkhebels (16) vorsieht, die mittels eines Freilaufgetriebes (26) in eine rotatorische Bewegung der Abtriebswelle (40) umgesetzt wird.

## Beschreibung

Die Erfindung betrifft ein Getriebe mit stufenlos einstellbarer Übersetzung, bei dem eine Rotationsbewegung einer Antriebswelle oder eine oszillierende Bewegung mindestens eines Antriebshebels über einen Hebelmechanismus oder einen hydraulischen Linearantrieb o. dgl. in eine Rotationsbewegung einer Abtriebswelle umgesetzt wird.

Über- und Untersetzungsgetriebe sind in den unterschiedlichsten Ausführungsformen bekannt. Die meisten Getriebe sind als Stufengetriebe ausgestaltet. Daneben gibt es jedoch auch Getriebe, die eine stufenlose Über- bzw. Untersetzungsvariation ermöglichen. Die bekannteste Variante solcher stufenlos arbeitenden Getriebe ist die sog. Variomatic, bei der ein Zugmittel zur Kraftübertragung dient. Ein wirksamer Umschlingungsradius des Zugmittels auf einer Antriebs- sowie auf einer Abtriebswelle ist jeweils dadurch variierbar, dass Kegelscheiben axial gegeneinander verschoben werden, an deren zueinander weisenden Kegelflächen das Zugmittel mit seinen inneren Kanten reibschlüssig anliegt.

Darüber hinaus sind zahlreiche unterschiedliche Ausführungsformen von Getrieben mit stufenlos einstellbaren Übersetzungen bekannt, die jeweils mit mechanischen Hebeigetrieben versehen sind. So beschreibt die US 17 88 815 A ein Übersetzungsgetriebe, bei dem die Übersetzung mittels eines verstellbaren Hebels verändert werden kann.

Die DE 12 04 488 C offenbart ein stufenlos regelbares Schaltgetriebe, das Kurvenscheiben zum Umwandeln einer Drehbewegung in eine schwingende Bewegung über einen schwingend gelagerten Hebel und einen Freilauf aufweist. Der Drehpunkt des Hebels ist verschiebbar. Zudem ist das von der Kurvenscheibe geführte Hebelende möglichst weitgehend gerade geführt.

Aus der DE 19 20 588 A ist ein Getriebe mit regelbarem Freilaufantrieb bekannt, bei dem eine gleichförmige Drehgeschwindigkeit eines Vorschubs durch Kurven erzeugt wird, die der Gleichförmigkeit angepasst sind. Die Übersetzung kann durch Verstellen eines Schwenkhebels variiert werden der mit einer Schubstange in Verbindung steht.

Die US 41 82 203 beschreibt weiterhin ein mechanisches Getriebe mit kontinuierlich anpassbarer Übersetzung, bei dem eine Drehbewegung über schwenkbar gelagerte Hebel in oszillierende Bewegungen von Zahnstangen umgewandelt werden. Diese Zahnstangen treiben wiederum über Zahnräder eine rotierende Abtriebswelle an.

Aus der DE 34 11 130 A1 ist ein Getriebe zum Übertragen einer Drehbewegung mit stufenlos veränderlicher Übersetzung bekannt. Bei dem Getriebe wird die Drehbewegung einer Antriebswelle durch ein Kurbelgetriebe, dessen Pleuelstange mit ihrem freien Ende in einer Kurvenbahn geführt ist, in eine translatorische Hin- und Herbewegung umgewandelt. Eine verstellbare seitliche Komponente dieser translatorischen Bewegung wird in einem zweiten Teilgetriebe in eine Drehbewegung zurückverwandelt. Durch entsprechende Formgebung der Kurvenbahn kann eine über einen weiten Bereich lineare Drehwinkelgeschwindigkeit erreicht werden, die über schaltbare Kupplungen auf die Ausgangswelle abgegeben wird.

Die DE 197 43 483 C2 beschreibt weiterhin ein Getriebe mit stufenlos einstellbarer Übersetzung, bei dem durch zwei zeitlich versetzt arbeitende Getriebeeinheiten die Drehbewegung einer Antriebswelle absatzweise für jeweils ein Zeitintervall auf eine Abtriebswelle übertragen wird. Jede Getriebeeinheit besitzt ein erstes Kraftübertragungsmittel, eine veränderbare Übersetzungseinrichtung und ein zweites Kraftübertragungsmittel sowie eine selbst schaltende oder schaltbare Kupplung. Unter der Voraussetzung einer gerade konstant gehaltenen Übersetzungseinstellung wandelt in der Kraftübertragungsphase das erste Kraftübertragungsmittel die gleichförmige Drehbewegung der Antriebswelle in eine gleichförmige Translationsbewegung um. Die Übersetzungseinrichtung formt die Bewegung in eine andere, ebenfalls gleichförmige Translationsbewegung mit einer von der Übersetzungseinstellung abhängigen Geschwindigkeit um. Das zweite Kraftübertragungsmittel wandelt diese Translationsbewegung in eine gleichförmige Drehbewegung um, die wiederum über die Kupplung auf die Abtriebswelle übertragen wird. Am zweiten Kraftübertragungsmittel erfolgt die Krafteinleitung über ein Kurvengetriebe in Verbindung mit einem geradlinig geführten Eingriffsglied.

Die DE 197 58 516 C2 beschreibt schließlich ein Getriebe mit stufenlos einstellbarer Übersetzung, bei dem durch zwei zeitlich versetzt arbeitende Getriebeeinheiten die Drehbewegung einer Antriebswelle absatzweise für jeweils ein Zeitintervall auf eine Abtriebswelle übertragen wird. Jede Getriebeeinheit besitzt ein erstes Kraftübertragungsmittel, eine veränderbare Übersetzungseinrichtung und ein zweites Kraftübertragungsmittel sowie eine selbst schaltende oder schaltbare Kupplung. Unter der Voraussetzung einer gerade konstant gehaltenen Übersetzungseinstellung wandelt in der Kraftübertragungsphase das erste Kraftübertragungsmittel die gleichförmige Drehbewegung der Antriebswelle in eine gleichförmige Translationsbewegung um. Die Übersetzungseinrichtung formt die Bewegung in eine andere, ebenfalls gleichförmige Translationsbewegung mit einer von der Übersetzungseinstellung abhängigen Geschwindigkeit um. Das zweite Kraftübertragungsmittel wandelt diese Translationsbewegung in eine gleichförmige Drehbewegung um, die wiederum über die Kupplung auf die Abtriebswelle übertragen wird. Weitere Mittel verschieben den für den Hub benutzten Bereich innerhalb der nutzbaren Hubstrecke des zweiten Kraftübertragungsmittels während des Getriebelaufs mit einer die Abtriebsbewegung nur unwesentlich beeinflussenden Geschwindigkeit.

Diese bekannten stufenlosen Getriebe weisen einen relativ komplizierten Aufbau auf. Zudem sind die Wirkungsgrade nicht optimal.

Ein Ziel der vorliegenden Erfindung wird darin gesehen, ein stufenlos in seiner Über- bzw. Untersetzung variierbares Getriebe zur Verfügung zu stellen, bei dem eine Rotation einer Antriebswelle bzw. eine oszillierende Bewegung von Antriebshebeln in eine Rotation einer Abtriebswelle umgesetzt werden kann.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Ein Getriebe gemäß einer ersten Ausführungsvariante der Erfindung umfasst eine rotierende Antriebswelle, eine rotierende Abtriebswelle und einen zwischen diesen Wellen angeordneten Wirkmechanismus, der eine Umsetzung der Rotation der Antriebswelle in eine translatorische Bewegung wenigstens einer Koppelstange sowie eines Schwenkhebels vorsieht, die mittels eines Freilaufgetriebes in eine rotatorische Bewegung der Abtriebswelle umgesetzt wird. Wahlweise ist auch eine Umsetzung der rotatorischen Bewegung der Antriebswelle direkt auf einen schwenkbaren Hebel möglich, der mit einem Zugmittel, einer Zug- oder Schubstange o. dgl. verbunden ist, die über ein Freilaufgetriebe mit der Abtriebswelle zusammenwirkt.

Ein Getriebe gemäß einer weiteren Ausführungsvariante der Erfindung umfasst einen oszillierenden Antriebsmechanismus, eine rotierende Abtriebswelle und einen zwischen diesen Wellen angeordneten Wirkmechanismus, der eine Umsetzung der Oszillation des Antriebsmechanismus in eine translatorische Bewegung wenigstens einer Koppelstange und/oder eines Schwenkhebels vorsieht, die mittels eines Freilaufgetriebes in eine rotatorische Bewegung der Abtriebswelle umgesetzt wird. Wahlweise ist auch eine Umsetzung der oszillierenden Bewegung des Antriebs direkt auf einen schwenkbaren Hebel möglich, der mit einem Zugmittel, einer Zug- oder Schubstange o. dgl. verbunden ist, die über ein Freilaufgetriebe mit der Abtriebswelle zusammenwirkt. Der Antriebsmechanismus kann bspw. ein Pedalantrieb sein und vorzugsweise mit zwei parallelen Getrieben gekoppelt sein, die auf die selbe Abtriebswelle wirken.

Bei dem Getriebe wird die Rotation der Antriebswelle vorzugsweise mittels eines Kurvengetriebes in eine translatorische Bewegung einer ersten Koppelstange umgesetzt. Weiterhin kann die translatorische Bewegung der ersten Koppelstange über einen schwenkbar gelagerten Schwenkhebel in eine gegenläufige translatorische Bewegung einer zweiten Koppelstange umgesetzt werden.

Alternativ kann auch die Rotation der Antriebswelle mittels eines Kurvengetriebes in eine Schwenkbewegung eines schwenkbar gelagerten Schwenkhebels umgesetzt werden. Hierdurch kann ggf. auf die erste Koppelstange verzichtet werden. Bei dieser Variante wird die Schwenkbewegung des Schwenkhebels in eine translatorische Bewegung einer zweiten Koppelstange umgesetzt.

Bei einer Ausführungsvariante des Getriebes ist vorgesehen, dass die translatorische Bewegung der zweiten Koppelstange über ein Zugmittel oder eine Schubstange bzw. eine Zahnstange in eine rotatorische Bewegung eines Freilaufgetriebes übertragen wird. Das Freilaufgetriebe ist mit der Abtriebswelle gekoppelt.

Das Getriebe ermöglicht eine stufenlose Übersetzungsänderung zwischen einer Antriebsdrehzahl und einer Abtriebsdrehzahl mittels einer Variation einer Auslenkung der ersten Koppelstange. Wahlweise kann die stufenlose Übersetzungsänderung zwischen der Antriebsdrehzahl und der Abtriebsdrehzahl mittels einer Verstellung des Kurvengetriebes realisiert werden.

Zusätzlich oder alternativ kann eine stufenlose Übersetzungsänderung zwischen einer Antriebsdrehzahl und einer Abtriebsdrehzahl mittels einer Variation einer Auslenkung der zweiten Koppelstange realisiert werden.

Ein Abstand zwischen einem Schwenklager des Schwenkhebels und der ersten Koppelstange kann variabel sein. Weiterhin kann ein Abstand zwischen dem Schwenklager des Schwenkhebels und der zweiten Koppelstange variabel sein.

Eine alternative Ausführungsform des Getriebes sieht eine hydraulische Kraftübertragung zwischen einem Nehmerzylinder und einem Linearantrieb vor, der bspw. eine Zahnstange betätigen kann, die auf eine Außenverzahnung eines Mitnehmerrades eines Freilaufgetriebes wirkt. Der Nehmerzylinder kann bspw. die Außenkontur einer Kurvenscheibe abtasten. Wahlweise kann der Nehmerzylinder auch die Außenkontur eines axial auf der Antriebswelle verschiebbaren Kurvenkörpers abtasten.

Bei allen erwähnten Getriebevarianten kann zwischen den Grundvarianten unterschieden werden, bei denen sich ein Krafthub mit einem Leerhub abwechselt und bei denen kein Leerhub vorgesehen ist. Folgt jedem Krafthub ein Leerhub, muss für ein gleichmäßiges Abtriebsdrehmoment mindestens eine zweifache Getriebeausführung vorhanden sein, damit sich die jeweiligen Krafthübe des einen Getriebes mit den Leerhüben des anderen Getriebes überlagern können. Bei der Variante mit den Kurvenscheiben können diese auf einer gemeinsamen Antriebswelle gegeneinander verdreht sein, so dass eine konstante Kraftübertragung gewährleistet ist.

Bei der Variante ohne Leerhub ist nur ein Getriebe notwendig, wodurch sich ein einfacherer Aufbau ergibt. Bei einer Kurvenscheibe muss diese mit einer Führungskulisse o. dgl. ausgestattet sein, so dass eine Zwangsführung der Antriebshebel ermöglicht ist. Nachteilig bei dieser Variante ist allerdings, dass an den Kurvenwechselpunkten Umschaltverluste entstehen, in denen keine Kraft übertragen werden kann. Für beide Systeme gilt, dass die Wendepunkte in ihrer Steigung den technischen Erfordernissen angepasst werden können.

Für den Hebelmechanismus zur Variation der Übersetzung kommen zwei Hauptvarianten in Frage. Bei der ersten Variante werden beide Linearführungslager gleichzeitig und parallel verstellt, um die Übersetzung zu ändern. Diese Variante ist konstruktiv aufwändiger als die alternative Variante, bei der die Übersetzung durch Verschwenken eines Übersetzungshebels geändert werden kann. Ein Linearführungslager ist hierbei ortsfest angebracht, so dass nur eines von zwei Linearführungslagern in seiner relativen Lage zum Antriebshebel verschoben werden kann.

Für die Kraftübertragung zum Freilauf kommen Zugmittel wie Ketten, Seile, Riemen oder Zug- und Druckmittel wie bspw. Zahnstangen in Frage. Wird der Linearhebel in Zugrichtung der Kette angetrieben, können auf einfache Weise sehr hohe Kräfte übertragen werden. Wird der Linearhebel entgegengesetzt angetrieben, wird die Abtriebswelle, unterstützt von der Spannfeder der Kette, entgegengesetzt verdreht. Hierbei kann jedoch keine Kraft übertragen werden. Bei einer Zahnstange können Kräfte in beide Richtungen übertragen werden.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.
Fig. 1 zeigt eine schematische Prinzipdarstellung einer ersten Ausführungsvariante eines erfindungsgemäßen Getriebes.
Fig. 2 zeigt eine weitere Darstellung des Getriebes gemäß Fig. 1.
Fig. 3 zeigt eine schematische Prinzipdarstellung einer ersten Ausführungsvariante eines erfindungsgemäßen Getriebes.
Fig. 4 zeigt eine weitere Darstellung des Getriebes gemäß Fig. 1.
Fig. 5 zeigt eine erste Variante einer Kurvenscheibe des Getriebes gemäß Fig. 1 und Fig. 2.
Fig. 6 zeigt eine zweite Variante einer Kurvenscheibe des Getriebes gemäß Fig. 1 und Fig. 2.
Fig. 7 zeigt eine dritte Variante einer Kurvenscheibe des Getriebes gemäß Fig. 1 und Fig. 2.

Die Figuren 8 bis 15 verdeutlichen die Verstellmöglichkeiten und die Wirkungsweise des erfindungsgemäßen Getriebes.
Fig. 16 zeigt eine erste Variante einer Koppelung der Kurvenscheibe des Getriebes gemäß Fig. 1 und Fig. 2 mit einer Koppelstange.
Fig. 17 zeigt eine zweite Variante der Koppelung der Kurvenscheibe des Getriebes gemäß Fig. 1 und Fig. 2 mit einer Koppelstange.
Fig. 18. zeigt einen Kurvenkörper zur Erzielung eines variablen Oszillationshubs bei einem Getriebe gemäß Fig. 1 und Fig. 2.
Fig. 19 zeigt eine alternative Kraftübertragungsmöglichkeit mit einer Zahnstange anstelle eines Zugmittels.
Fig. 20 zeigt eine weitere alternative Ausführungsvariante des Getriebes mit hydraulischer Kraftübertragung.
Fig. 21 zeigt eine Ausgestaltung einer Getriebeanordnung zur Ermöglichung einer Drehrichtungsumkehr der Kraftübertragung.
Fig. 22 zeigt eine weitere alternative Ausführungsvariante des Getriebes mit einem verstellbaren Schwenkhebel zur Übersetzungsanpassung.

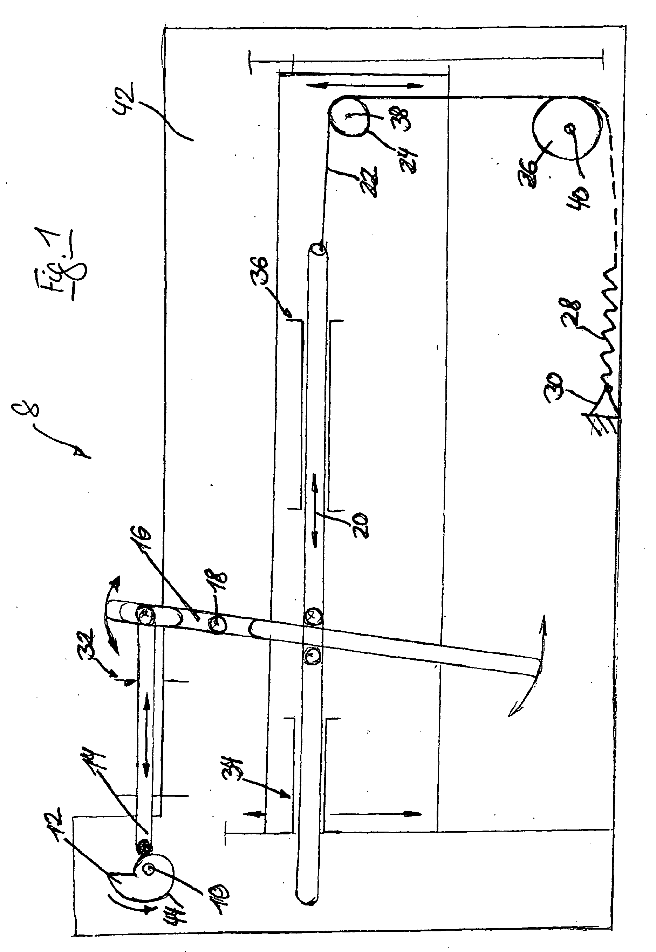

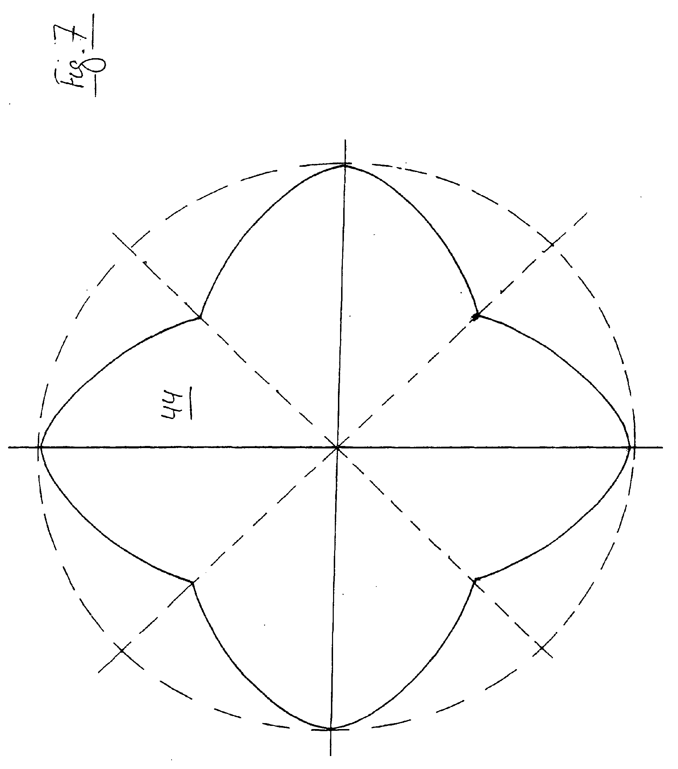

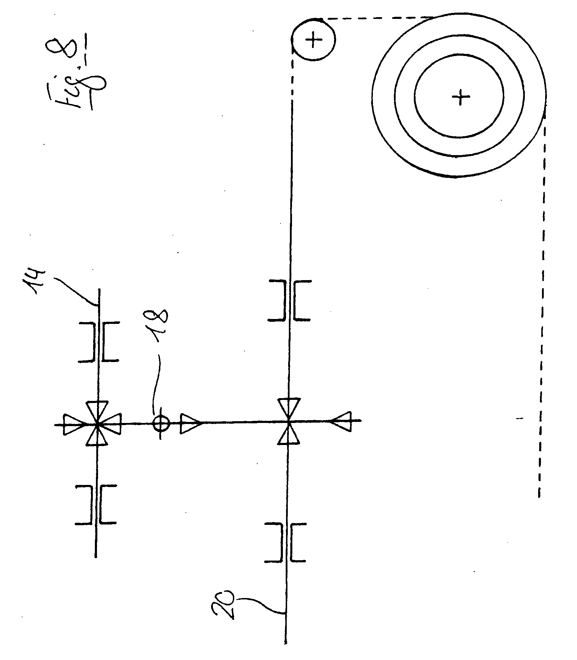

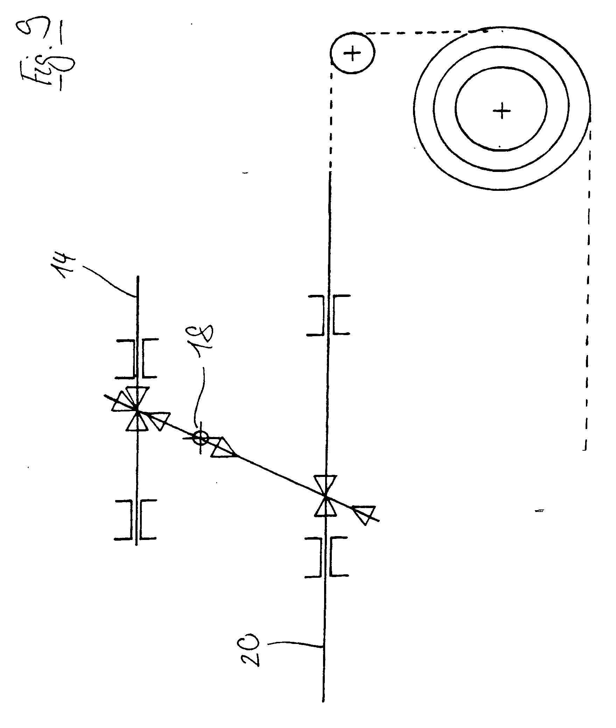

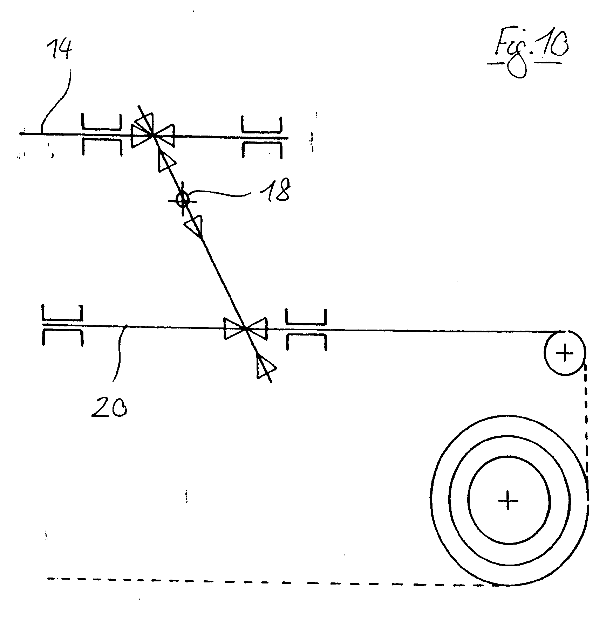

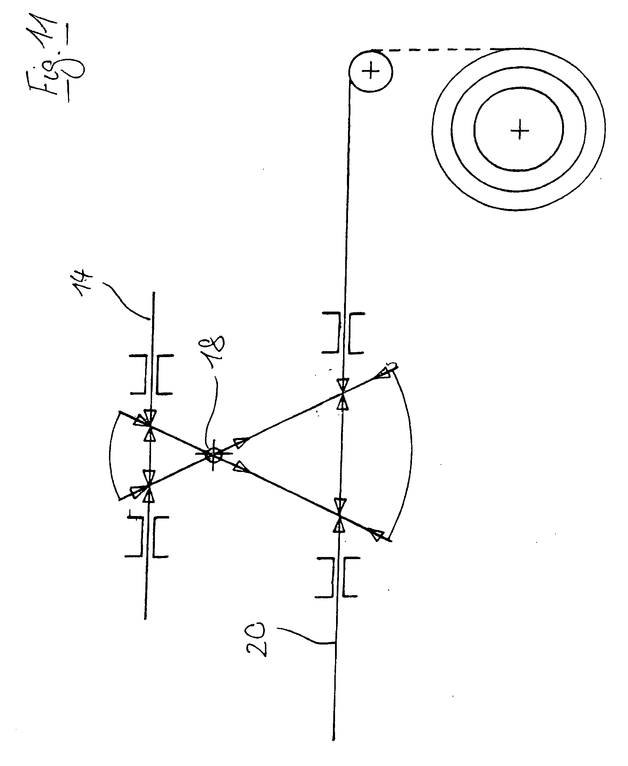

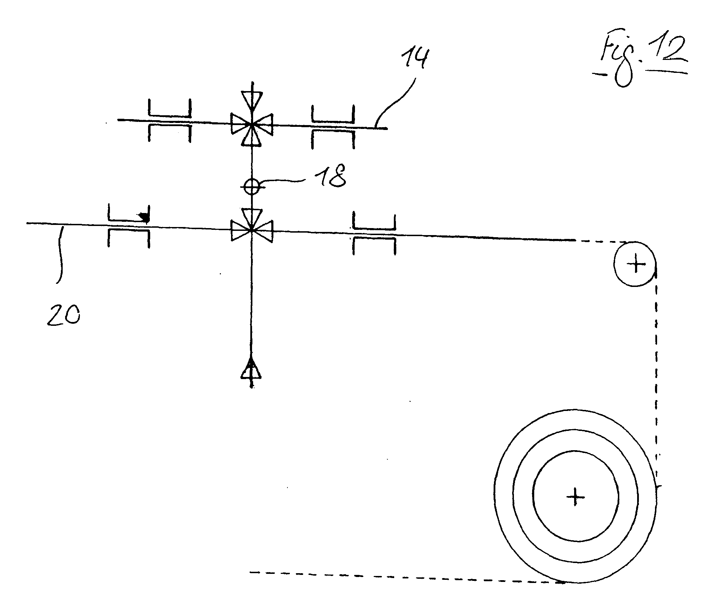

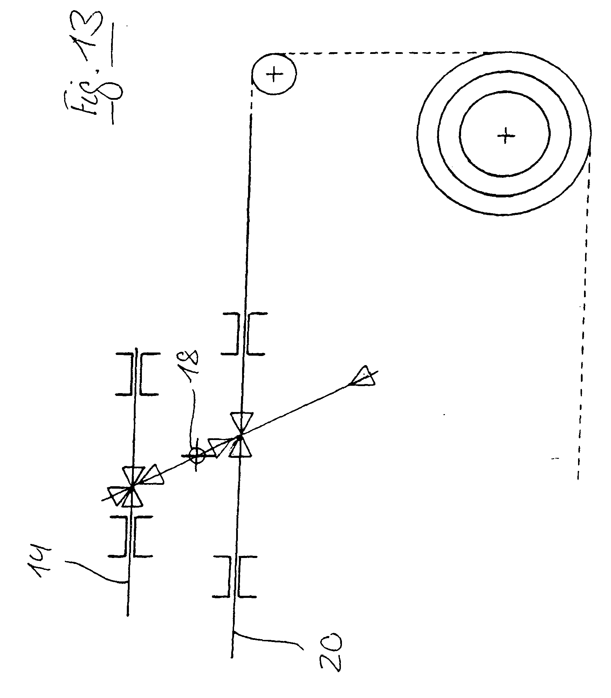

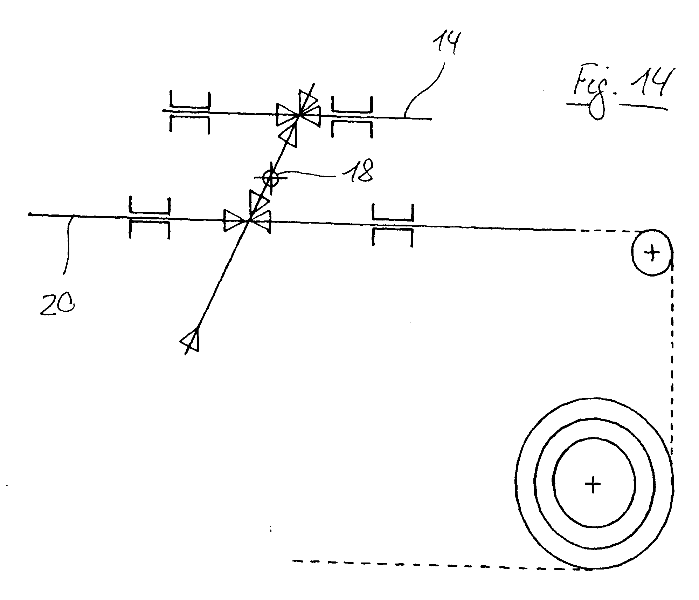

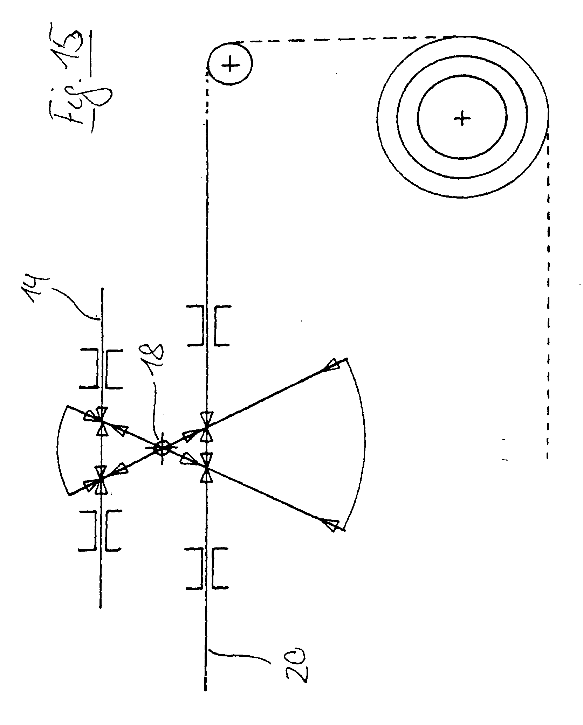

Anhand der Figuren 1 bis 22 werden verschiedene Ausführungsvarianten eines erfindungsgemäßen Getriebes mit variabler Übersetzung illustriert. Gleiche Teile sind grundsätzlich mit gleichen Bezugszeichen versehen und sind teilweise nicht mehrfach erläutert.

Fig. 1 zeigt eine schematische Prinzipdarstellung einer ersten Ausführungsvariante eines erfindungsgemäßen Getriebes 8, bei dem eine Rotation einer Antriebswelle 10 mittels eines Kurvengetriebes 12 in eine oszillierende Linearbewegung einer ersten Koppelstange 14 umgesetzt wird. Die erste Koppelstange 14 ist an einem dem Kurvengetriebe 12 entgegen gesetzten Ende mit einem Schwenkhebel 16 gekoppelt, mit dem die oszillierende Linearbewegung der ersten Koppelstange 14 in eine oszillierende Schwenkbewegung um ein Schwenlager 18 umgesetzt wird. An einer dem Schwenklager 18 gegenüber liegenden Seite ist der Schwenkhebel 16 mit einer zweiten Koppelstange 20 gekoppelt, so dass die erste Koppelstange 14 und die zweite Koppelstange 20 gegenläufige Bewegungen in paralleler Richtung ausführen. Die beiden Koppeistangen 14 und 20 oszillieren mit gleicher Frequenz und gleicher oder unterschiedlicher Amplitude, je nach den Hebelverhältnissen zwischen dem Schwenklager 18 und deren Abstand zur ersten bzw. zweiten Koppelstange 14 bzw. 20.

An einem freien Ende ist die zweite Koppelstange 20 mit einem Zugmittel 22 gekoppelt, das über eine Umlenkrolle 24 mit einem Freilaufgetriebe 26 gekoppelt ist. An einem freien Ende und in einem Abstand zum Freilaufgetriebe 26 ist das Zugmittel 22 mit einer Spannfeder 28 verbunden, die in einem gehäuse- oder rahmenfesten Lager 30 verankert ist.

Die Antriebswelle 10, das Kurvengetriebe 12, ein erstes Linearführungslager 32 zur linear verschiebbaren Lagerung der ersten Koppelstange 14, das Schwenklager 18 zur Lagerung des Schwenkhebels 16, ein zweites Linearführungslager 34 zur linear verschiebbaren Lagerung der zweiten Koppelstange 20, ein (optionales) drittes Linearführungslager 36 zur linear verschiebbaren Lagerung der zweiten Koppelstange 20, ein Umlenklager 38 zur Lagerung der Umlenkrolle 24, eine Abtriebswelle 40, an der das Freilaufgetriebe 26 gelagert ist, sowie das Lager 30 zur Verankerung der Spannfeder 28 können in einer gemeinsamen Grundplatte 42 oder in einem dafür geeigneten Rahmen, Gehäusebauteil o. dgl. gelagert und verankert sein.

Das Getriebe 8 funktioniert folgendermaßen: eine Rotation der Antriebswelle 10 wird in eine oszillierende Linearbewegung der ersten und zweiten Koppelstange 14, 20 umgesetzt, welche diese Linearbewegung mittels des Freilaufgetriebes 26 in eine Rotation der Abtriebswelle 40 umsetzen. Um eine Übersetzungsänderung bei diesen Bewegungsübertragungen zu erreichen, genügt es, die Hebelverhältnisse zwischen den Koppelpunkten des Schwenkhebels 16 mit den Koppelstangen 14 und 20 zu verändern, was wahlweise durch eine Vertikalverschiebung der Schwenkachse 18 und/oder durch eine Vertikalverschiebung der zweiten Koppelstange mitsamt der Umlenkrolle 24 erfolgen kann. Werden diese Vertikalverschiebungen stufenlos ausgeführt, kann eine stufenlose Übersetzungsänderung zwischen Drehzahl der Antriebswelle 10 und der Drehzahl der Abtriebswelle 40 erreicht werden.

Das Kurvengetriebe 12 wird im Wesentlichen durch eine Kurvenscheibe 44 gebildet, die drehfest mit der Antriebswelle 10 verbunden ist und mit deren Drehzahl rotiert. Der sich über einen kompletten Außenumfang der Kurvenscheibe 44 zunächst vergrößernde Radius und sich dann wieder verkleinernde Radius der Kurvenscheibe 44 veranlasst die erste Koppelstange 14 zu einer oszillierenden Linearbewegung, die in der gezeigten Darstellung in horizontaler Richtung verläuft. Die im gezeigten Ausführungsbeispiel nur qualitativ angedeutete Außenkontur der Kurvenscheibe 44 sieht eine Radiuszunahme vom minimalen Radius bis zum maximalen Radius über einen Winkelbereich von ca. 270 Grad und eine Radiusabnahme auf den minimalen Radius über einen Winkelbereich von ca. 90 Grad vor. Die Außenkontur der Kurvenscheibe 44 ist vorzugsweise so gewählt, dass die Radiuszunahme linear über den Drehwinkel erfolgt. Die Radiusabnahme kann sprunghaft erfolgen.

Der Rückhub der ersten Koppelstange 14 bei der Radiusabnahme der Kurvenscheibe 44 wird vorzugsweise mittels einer geeigneten Feder (nicht dargestellt) unterstützt. Diese kann wahlweise für einen Rückhub der ersten Koppelstange 14, der zweiten Koppelstange 20 und/oder für eine Rückstellbewegung des Schwenkhebels 16 sorgen. Da diese drei Elemente miteinander gekoppelt sind, genügt grundsätzlich eine Rückstellfeder. Wahlweise können jedoch auch mehrere Rückstelleinrichtungen vorgesehen sein.

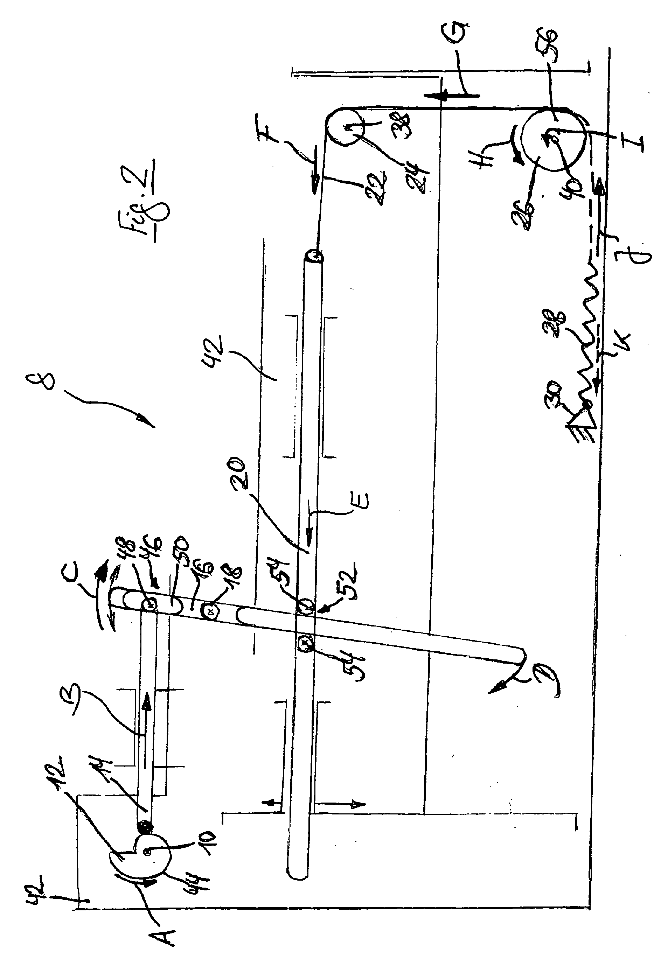

Anhand der Fig. 2 wird der Bewegungsablauf der einzelnen Elemente des Getriebes 8 verdeutlicht. Bei einer Rotation der Abtriebswelle 10 gegen den Uhrzeigersinn (Pfeil A) wird durch die sich im Radius vergrößernde Anlagefläche der Kurvenscheibe 44 eine Linearbewegung der ersten Koppelstange 14 nach rechts (Pfeil B) ausgelöst. Ein freies Ende der ersten Koppelstange 14, das dem Kurvengetriebe 12 gegenüber liegt, ist über eine erste Kulissenführung 46 mit dem oberen Abschnitt des Schwenkhebels 16 gekoppelt. Diese erste Kulissenführung 46 umfasst einen an der ersten Koppelstange 14 angeordneten Zapfen 48, der in einem Langloch 50 gleitet, das am Schwenkhebel 16 angeordnet ist und dessen Längserstreckungsrichtung sich mit der Längsachse des Schwenkhebels 16 deckt. Durch diese Kulissenführung wird der obere Abschnitt des Schwenkhebels 16 im Uhrzeigersinn um einen bestimmten Winkel nach rechts verschwenkt (Pfeil C), wobei dieser Schwenkbewegung aufgrund der Schwenklagerung 18 des Schwenkhebels 16 eine gegensinnige Schwenkbewegung des unteren Abschnitts des Schwenkhebels 16 gekoppelt ist (Pfeil D). Die Schwenkbewegung des unteren Abschnitts des Schwenkhebels 16 (D) erfolgt selbstverständlich ebenfalls im Uhrzeigersinn, jedoch in der gezeigten Darstellung nach links.

Der untere Abschnitt des Schwenkhebels 16 ist über eine zweite Kulissenführung 52 mit der zweiten Koppelstange 20 gekoppelt. Diese zweite Kulissenführung 52 kann ähnlich ausgestaltet sein wie die erste, sieht jedoch im gezeigten Ausführungsbeispiel zwei drehbar an der zweiten Koppelstange 20 gelagerte Rollen 54 vor, zwischen deren Außenumfang die gegenüber liegenden Seitenflanken des unteren Abschnitts des Schwenkhebels 16 abwälzen.

Die Schwenkbewegung des unteren Abschnitts der Koppelstange 16 im Uhrzeigersinn nach links (Pfeil D) veranlasst die zweite Koppelstange 20, einen Linearhub nach links (Pfeil E) auszuführen. Durch die Verankerung des Zugmittels 22 am rechten freien Ende der zweiten Koppelstange 16 wird auch das Zugmittel in Pfeilrichtung F nach links gezogen. Aufgrund der Umlenkung mittels der Umlenkrolle 24 wird der zwischen Umlenkrolle 24 und Freilaufgetriebe 26 angeordnete Abschnitt des Zugmittels 22 in Pfeilrichtung G nach oben gezogen. Hierdurch wird das Mitnehmerrad 56 des Freilaufgetriebes 26 gegen den Uhrzeigersinn in Richtung des Pfeils H verdreht, wobei diese Drehbewegung aufgrund der Sperrwirkung des Freilaufgetriebes 26 unmittelbar auf die Abtriebwelle 40 übertragen wird (Pfeil I).

Der untere horizontale Abschnitt des Zugmittels 22 wird hierbei gegen die Rückstellkraft der Spannfeder 28 nach rechts gezogen (Pfeil J), bis die Kurvenscheibe 44 des Kurvengetriebes 12 so verdreht ist, dass die erste Koppelstange 14 ihre maximale Auslenkung nach rechts erreicht hat. Wenn dies der Fall ist, macht der Radius einen Sprung, was eine Rückbewegung der erwähnten Elemente entgegen der eingezeichneten Pfeilrichtungen zur Folge hat.

Bei der Rückbewegung des Zugmittels 22 in Richtung der Rückstellkraft (Pfeil K) der Spannfeder 28 ist die Sperrwirkung des Freilaufgetriebes 26 aufgehoben, so dass keine Kraftübertragung vom Mitnehmerrad 56 auf die Abtriebswelle 40 erfolgt.

Das Zugmittel 22 kann bspw. eine herkömmliche Rollenkette o. dgl. sein. Als Zugmittel eignen sich jedoch auch Stahldrähte, Kunststoffdrähte, Keil- oder Rippenriemen oder verschiedene Seilarten.

Eine stufenlose Übersetzungsänderung kann durch Änderung der wirksamen Hebellängen des Schwenkhebels zwischen oberer und unterer Kulissenführung erreicht werden. Bei einer ersten Variante kann hierzu das Schwenklager 18 in vertikaler Richtung verschoben werden. Bei einer zweiten Variante kann die gesamte zweite Koppelstange 20 mitsamt der Umlenkrolle 24 in vertikaler Richtung verschoben werden. In beiden Fällen ändern sich die Hebelverhältnisse, so dass eine konstante Amplitude der ersten Koppelstange 14 in eine variable Amplitude der zweiten Koppelstange 20 übersetzt werden kann. Die variable Amplitude der zweiten Koppelstange 20 führt zu der gewünschten Übersetzungsänderung bei der Übertragung einer vorgegebenen Winkelgeschwindigkeit der Antriebswelle 10 in eine gewünschte Winkelgeschwindigkeit der Abtriebswelle 40.

Aus dem oben Gesagten wird unmittelbar deutlich, dass während der Rückstellbewegung des Zugmittels 22 sowie des Hebelmechanismus in Pfeilrichtung K, die während des Radiussprungs der Kurvenscheibe 44 erfolgt, keine Kraftübertragung auf die Abtriebswelle 40 erfolgt. Aus diesem Grund ist zur konstanten Kraftübertragung ohne derartige Drehmomentsprünge eine kombinierte Anordnung mindestens zweier derartiger Getriebe 8 notwendig, die zweckmäßigerweise in paralleler Anordnung betrieben werden. Hierbei können zwei derartige Getriebe nebeneinander angeordnet sein, wobei vorzugsweise die Kurvengetriebe 12 sowie die Freilaufgetriebe 26 der beiden parallelen Getriebe 8 mit jeweils der selben Antriebswelle 10 bzw. Abtriebswelle 40 gekoppelt sind. Bei einer Winkelverdrehung der beiden Kurvenscheiben 44 um jeweils 180 Grad kann eine kontinuierliche Kraftübertragung gewährleistet werden, da sich bei einer Rücklaufbewegung des einen Freilaufs der jeweils andere in sperrendem Eingriff befindet und umgekehrt.

Selbstverständlich können auch mehr als zwei derartige Getriebe 8 miteinander gekoppelt werden.

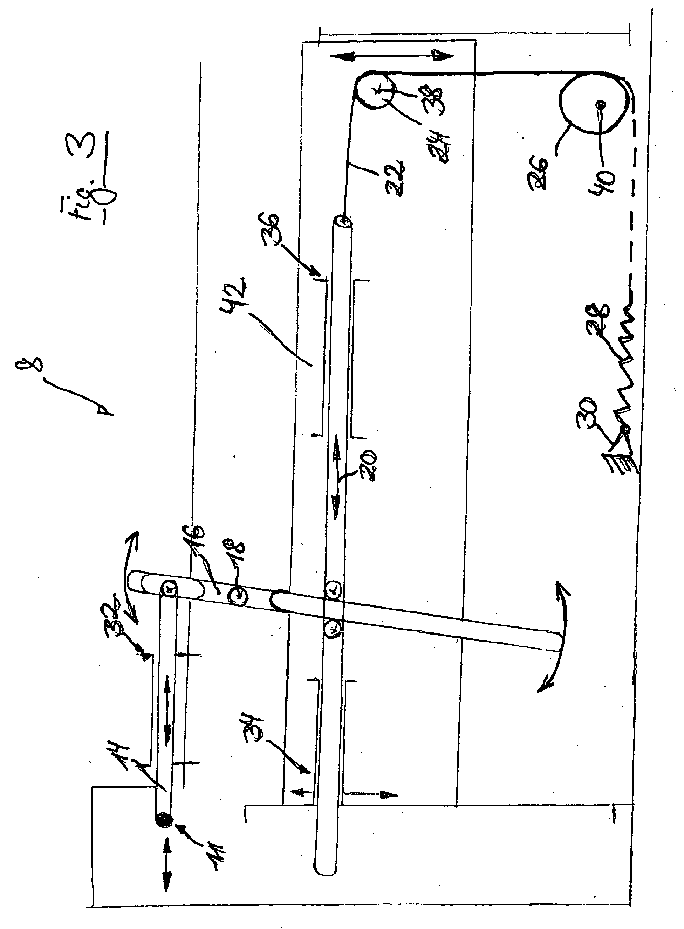

Fig. 3 zeigt eine schematische Prinzipdarstellung einer alternativen Ausführungsvariante eines erfindungsgemäßen Getriebes 8, bei dem eine Oszillation eines Antriebsmechanismus 11 mittels einer Koppelverbindung in eine oszillierende Linearbewegung einer ersten Koppelstange 14 umgesetzt wird. Die erste Koppelstange 14 ist an einem dem Antriebsmechanismus 10 entgegen gesetzten Ende mit einem Schwenkhebel 16 gekoppelt, mit dem die oszillierende Linearbewegung der ersten Koppelstange 14 in eine oszillierende Schwenkbewegung um ein Schwenklager 18 umgesetzt wird. An einer dem Schwenklager 18 gegenüber liegenden Seite ist der Schwenkhebel 16 mit einer zweiten Koppelstange 20 gekoppelt, so dass die erste Koppelstange 14 und die zweite Koppelstange 20 gegenläufige Bewegungen in paralleler Richtung ausführen. Die beiden Koppelstangen 14 und 20 oszillieren mit gleicher Frequenz und gleicher oder unterschiedlicher Amplitude, je nach den Hebelverhältnissen zwischen dem Schwenklager 18 und deren Abstand zur ersten bzw. zweiten Koppelstange 14 bzw. 20. An einem freien Ende ist die zweite Koppelstange 20 mit einem Zugmittel 22 gekoppelt, das über eine Umlenkrolle 24 mit einem Freilaufgetriebe 26 gekoppelt ist. An einem freien Ende und in einem Abstand zum Freilaufgetriebe 26 ist das Zugmittel 22 mit einer Spannfeder 28 verbunden, die in einem gehäuse- oder rahmenfesten Lager 30 verankert ist.

Der Antriebsmechanismus 11, ein erstes Linearführungslager 32 zur linear verschiebbaren Lagerung der ersten Koppelstange 14, das Schwenklager 18 zur Lagerung des Schwenkhebels 16, ein zweites Linearführungslager 34 zur linear verschiebbaren Lagerung der zweiten Koppelstange 20, ein (optionales) drittes Linearführungslager 36 zur linear verschiebbaren Lagerung der zweiten Koppelstange 20, ein Umlenklager 38 zur Lagerung der Umlenkrolle 24, eine Abtriebswelle 40, an der das Freilaufgetriebe 26 gelagert ist, sowie das Lager 30 zur Verankerung der Spannfeder 28 können in einer gemeinsamen Grundplatte 42 oder in einem dafür geeigneten Rahmen o. dgl. gelagert und verankert sein.

Das Getriebe 8 funktioniert folgendermaßen: eine Oszillation des Antriebsmechanismus 11 wird in eine oszillierende Linearbewegung der ersten und zweiten Koppelstange 14, 20 umgesetzt, welche diese Linearbewegung mittels des Freilaufgetriebes 26 in eine Rotation der Abtriebswelle 40 umsetzen. Um eine Übersetzungsänderung bei diesen Bewegungsübertragungen zu erreichen, genügt es, die Hebelverhältnisse zwischen den Koppelpunkten des Schwenkhebels 16 mit den Koppelstangen 14 und 20 zu verändern, was wahlweise durch eine Vertikalverschiebung der Schwenkachse 18 und/oder durch eine Vertikalverschiebung der zweiten Koppelstange mitsamt der Umlenkrolle 24 erfolgen kann. Werden diese Vertikalverschiebungen stufenlos ausgeführt, kann eine stufenlose Übersetzungsänderung zwischen Oszillationsgeschwindigkeit des Antriebs 10 und der Drehzahl der Abtriebswelle 40 erreicht werden.

Der Rückhub der ersten Koppelstange 14 bei einer Rückbewegung des Antriebs 10 wird vorzugsweise mittels einer geeigneten Feder (nicht dargestellt) unterstützt. Diese kann wahlweise für einen Rückhub der ersten Koppelstange 14, der zweiten Koppelstange 20 und/oder für eine Rückstellbewegung des Schwenkhebels 16 sorgen. Da diese drei Elemente miteinander gekoppelt sind, genügt grundsätzlich eine Rückstellfeder. Wahlweise können jedoch auch mehrere Rückstelleinrichtungen vorgesehen sein.

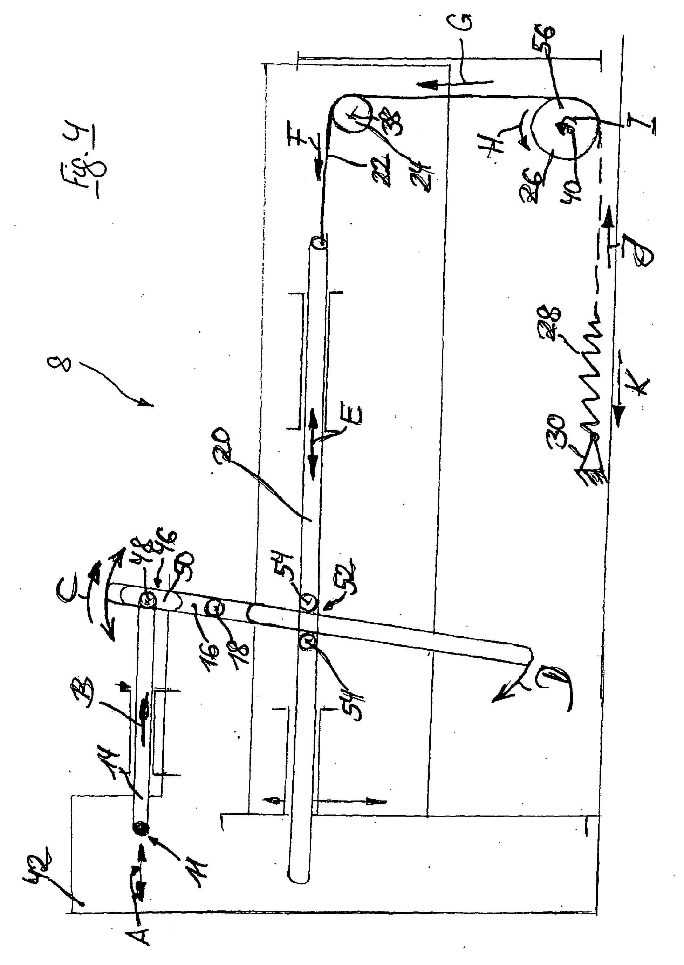

Anhand der Fig. 4 wird der Bewegungsablauf der einzelnen Elemente des Getriebes 8 verdeutlicht. Bei einer Oszillation des Abtriebsmechanismus 11 in horizontaler Richtung nach rechts (Pfeil A) wird durch eine geeignete Koppelung eine Linearbewegung der ersten Koppelstange 14 nach rechts (Pfeil B) ausgelöst. Ein freies Ende der ersten Koppelstange 14, das dem Antrieb 10 gegenüber liegt, ist über eine erste Kulissenführung 46 mit dem oberen Abschnitt des Schwenkhebels 16 gekoppelt. Diese erste Kulissenführung 46 umfasst einen an der ersten Koppelstange 14 angeordneten Zapfen 48, der in einem Langloch 50 gleitet, das am Schwenkhebel 16 angeordnet ist und dessen Längserstreckungsrichtung sich mit der Längsachse des Schwenkhebels 16 deckt. Durch diese Kulissenführung wird der obere Abschnitt des Schwenkhebels 16 im Uhrzeigersinn um einen bestimmten Winkel nach rechts verschwenkt (Pfeil C), wobei dieser Schwenkbewegung aufgrund der Schwenklagerung 18 des Schwenkhebels 16 eine gegensinnige Schwenkbewegung des unteren Abschnitts des Schwenkhebels 16 gekoppelt ist (Pfeil D). Die Schwenkbewegung des unteren Abschnitts des Schwenkhebels 16 (D) erfolgt selbstverständlich ebenfalls im Uhrzeigersinn, jedoch in der gezeigten Darstellung nach links.

Der untere Abschnitt des Schwenkhebels 16 ist über eine zweite Kulissenführung 52 mit der zweiten Koppelstange 20 gekoppelt. Diese zweite Kulissenführung 52 kann ähnlich ausgestaltet sein wie die erste, sieht jedoch im gezeigten Ausführungsbeispiel zwei drehbar an der zweiten Koppelstange 20 gelagerte Rollen 54 vor, zwischen deren Außenumfang die gegenüber liegenden Seitenflanken des unteren Abschnitts des Schwenkhebels 16 abwälzen.

Die Schwenkbewegung des unteren Abschnitts der Koppelstange 16 im Uhrzeigersinn nach links (Pfeil D) veranlasst die zweite Koppelstange 20, einen Linearhub nach links (Pfeil E) auszuführen. Durch die Verankerung des Zugmittels 22 am rechten freien Ende der zweiten Koppelstange 16 wird auch das Zugmittel in Pfeilrichtung F nach links gezogen. Aufgrund der Umlenkung mittels der Umlenkrolle 24 wird der zwischen Umlenkrolle 24 und Freilaufgetriebe 26 angeordnete Abschnitt des Zugmittels 22 in Pfeilrichtung G nach oben gezogen. Hierdurch wird das Mitnehmerrad 56 des Freilaufgetriebes 26 gegen den Uhrzeigersinn in Richtung des Pfeils H verdreht, wobei diese Drehbewegung aufgrund der Sperrwirkung des Freilaufgetriebes 26 unmittelbar auf die Abtriebwelle 40 übertragen wird (Pfeil I).

Der untere horizontale Abschnitt des Zugmittels 22 wird hierbei gegen die Rückstellkraft der Spannfeder 28 nach rechts gezogen (Pfeil J), bis der Antriebsmechanismus 11 so verschoben ist, dass die erste Koppelstange 14 ihre maximale Auslenkung nach rechts erreicht hat. Anschließend erfolgt eine Rückstellbewegung des Antriebsmechanismus 11, die auch zu einem Rückhub der ersten Koppelstange 14 führt.

Bei der Rückbewegung des Zugmittels 22 in Richtung der Rückstellkraft (Pfeil K) der Spannfeder 28 ist die Sperrwirkung des Freilaufgetriebes 26 aufgehoben, so dass keine Kraftübertragung vom Mitnehmerrad 56 auf die Abtriebswelle 40 erfolgt.

Das Zugmittel 22 kann bspw. eine herkömmliche Rollenkette o. dgl. sein. Als Zugmittel eignen sich jedoch auch Stahldrähte, Kunststoffdrähte, Keil- oder Rippenriemen oder verschiedene Seilarten.

Eine stufenlose Übersetzungsänderung kann durch Änderung der wirksamen Hebellängen des Schwenkhebels zwischen oberer und unterer Kulissenführung erreicht werden. Bei einer ersten Variante kann hierzu das Schwenklager 18 in vertikaler Richtung verschoben werden. Bei einer zweiten Variante kann die gesamte zweite Koppelstange 20 mitsamt der Umlenkrolle 24 in vertikaler Richtung verschoben werden. In beiden Fällen ändern sich die Hebelverhältnisse, so dass eine konstante Amplitude der ersten Koppelstange 14 in eine variable Amplitude der zweiten Koppelstange 20 übersetzt werden kann. Die variable Amplitude der zweiten Koppelstange 20 führt zu der gewünschten Übersetzungsanpassung bei der Übertragung einer vorgegebenen Oszillationsgeschwindigkeit des Antriebs 11 in eine gewünschte Winkelgeschwindigkeit der Abtriebswelle 40.

Aus dem oben Gesagten wird unmittelbar deutlich, dass während der Rückstellbewegung des Zugmittels 22 sowie des Hebelmechanismus in Pfeilrichtung K, die während der Rückbewegung des Antriebs 11 erfolgt, keine Kraftübertragung auf die Abtriebswelle 40 erfolgt. Aus diesem Grund ist zur konstanten Kraftübertragung ohne derartige Drehmomentsprünge eine kombinierte Anordnung mindestens zweier derartiger Getriebe 8 notwendig, die zweckmäßigerweise in paralleler Anordnung betrieben werden. Hierbei können zwei derartige Getriebe nebeneinander angeordnet sein, wobei ggf. die Antriebe 11 sowie vorzugsweise die Freilaufgetriebe 26 der beiden parallelen Getriebe 8 mit jeweils demselben Antriebsmechanismus 11 bzw. Abtriebswelle 40 gekoppelt sind. Bei einer Winkelverdrehung der beiden Antriebe 11 um jeweils 180 Grad kann eine kontinuierliche Kraftübertragung gewährleistet werden, da sich bei einer Rücklaufbewegung des einen Freilaufs der jeweils andere in sperrendem Eingriff befindet und umgekehrt.

Selbstverständlich können auch mehr als zwei derartige Getriebe 8 miteinander gekoppelt werden.

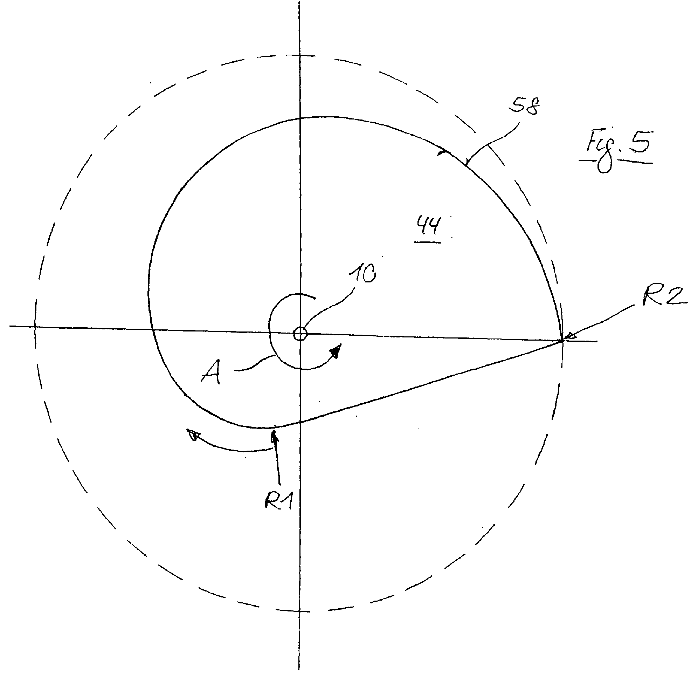

Die Fig. 5 verdeutlicht eine beispielhafte Ausgestaltung der Kurvenscheibe 44, die drehfest mit der Antriebswelle 10 verbunden ist. Die Außenkontur 58 der Kurvenscheibe 44 hat einen nicht konstanten Radius. Dieser nimmt von einem Punkt mit minimalem Radius R1 gleichmäßig zu, bis er einen Punkt der Außenkontur mit maximalem Radius R2 erreicht. Die Kurvenscheibe 44 rotiert in Pfeilrichtung A, entgegen des Uhrzeigersinns, so dass bei einer Umdrehung der Kurvenscheibe 44 über einen Drehwinkel von ca. 270 Grad eine Radiuszunahme von R1 auf R2 erfolgt. Diese Radiuszunahme erfolgt vorzugsweise konstant, so dass aus einer konstanten Winkelgeschwindigkeit der Antriebswelle 10 eine Linearbewegung der ersten Koppelstange 14 mit konstanter Geschwindigkeit erzeugt werden kann (vgl. Fig. 2). Hieraus resultiert aufgrund der starren Koppelung der ersten Koppelstange über den Schwenkhebel 14 mit der zweiten Koppelstange 20 eine konstante Zuggeschwindigkeit des Zugmittels 22 in Richtung der Pfeile F, G und J und somit auch eine konstante Winkelgeschwindigkeit des Mitnehmerrads 56 in Pfeilrichtung H.

Der Rückhub bei der Verdrehung der Kurvenscheibe um weitere 90 Grad, bei welcher ein Radiussprung zwischen maximalem Radius R2 und minimalem Radius R1 erfolgt, muss nicht linear sein, da hierbei der Freilauf des Freilaufgetriebes 26 entsperrt ist.

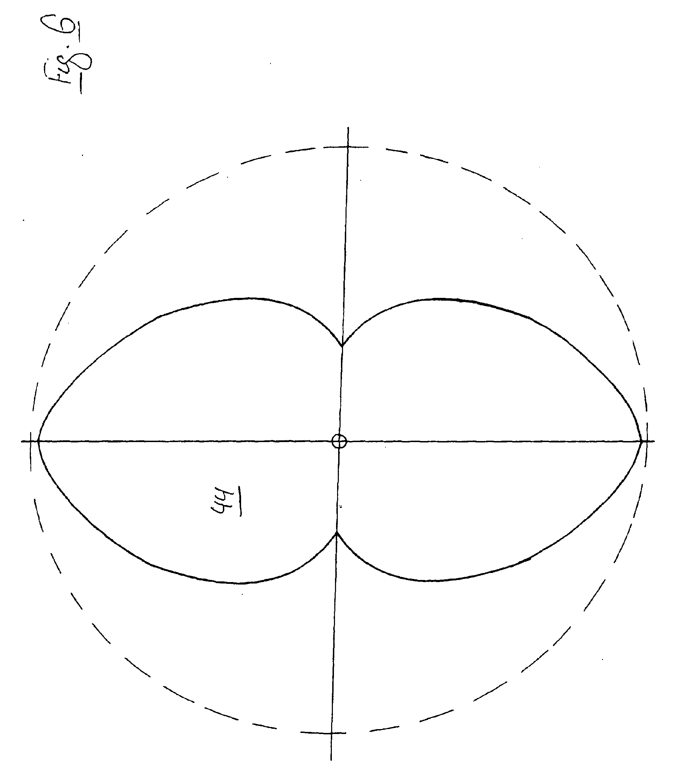

Die Fig. 6 zeigt eine alternative Ausgestaltung einer Kurvenscheibe 44, bei der während einer vollständigen Umdrehung zwei Linearhübe der ersten Koppelstange 16 ausgelöst werden.

Die Fig. 7 zeigt eine alternative Ausgestaltung einer Kurvenscheibe 44, bei der während einer vollständigen Umdrehung vier Linearhübe der ersten Koppelstange 16 ausgelöst werden.

Prinzipiell sind nahezu beliebige Unterteilungen der Kurvenscheibe 44 möglich, wobei jeweils sicherzustellen ist, dass einer konstanten Winkelgeschwindigkeit der Antriebswelle und damit der Kurvenscheibe 44 eine möglichst konstante Vorschubgeschwindigkeit der ersten Koppelstange 16 erzeugt wird.

Die Figuren 8 bis 11 verdeutlichen nochmals in Prinzipskizzen eine Übersetzung einer kleinen Amplitude der ersten Koppelstange 14 in eine größere Amplitude der zweiten Koppelstange 20, da der Abstand zwischen dem Schwenklager 18 und der ersten Koppelstange 14 kleiner ist als der Abstand zwischen dem Schwenklager 18 und der zweiten Koppelstange. Der übrige Aufbau des Getriebes 8 entspricht dem, der bereits anhand der Figuren 1 bis 4 erläutert wurde. Es kann sich wahlweise um eine Getriebevariante mit rotierender Antriebswelle 10 gemäß Fig. 1 und 2 oder um eine Getriebevariante mit oszillierendem Antriebsmechanismus 11 gemäß Fig. 3 und 4 handeln. Das nachfolgend Gesagte gilt für beide Varianten gleichermaßen.

Die Figuren 12 bis 15 verdeutlichen nochmals in Prinzipskizzen eine Übersetzung einer größeren Amplitude der ersten Koppelstange 14 in eine kleinere Amplitude der zweiten Koppelstange 20, da der Abstand zwischen dem Schwenklager 18 und der ersten Koppelstange 14 größer ist als der Abstand zwischen dem Schwenklager 18 und der zweiten Koppelstange. Der übrige Aufbau des Getriebes 8 entspricht dem, der bereits anhand der Figuren 1 bis 4 erläutert wurde.

Abwandlungen und Variationen einzelner Komponenten und Bauelemente sind möglich und sinnvoll und werden beispielhaft anhand der folgenden Figuren erläutert. Diese Variationen und Abwandlungen können grundsätzlich nahezu beliebig miteinander kombiniert werden, wodurch eine große Variantenvielfalt gebildet werden kann, die eine Anpassung des erfindungsgemäßen Getriebes an eine Vielzahl von möglichen Anwendungs- und Einsatzzwecke ermöglicht.

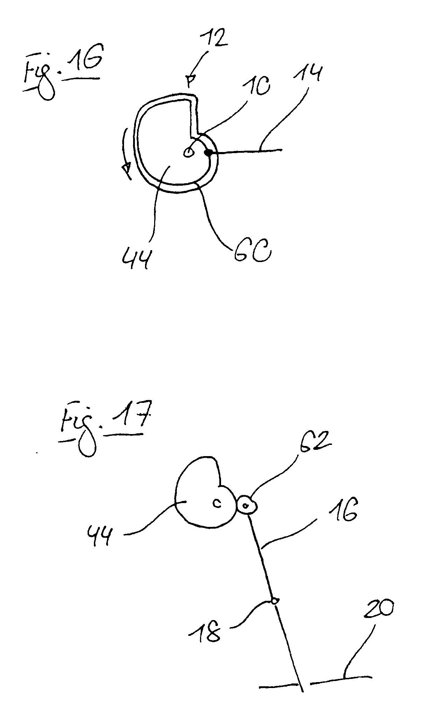

Fig. 16 verdeutlicht eine alternative Koppelung des Kurvengetriebes 12 mit der ersten Koppelstange 14, bei der diese einen Zapfen o. dgl. aufweist, der in einer Kulissenführung 60 gleitet, deren Verlauf die gewünschte Umsetzung der Rotation der Antriebswelle 10 in einen Linearhub der Koppelstange 14 steuert.

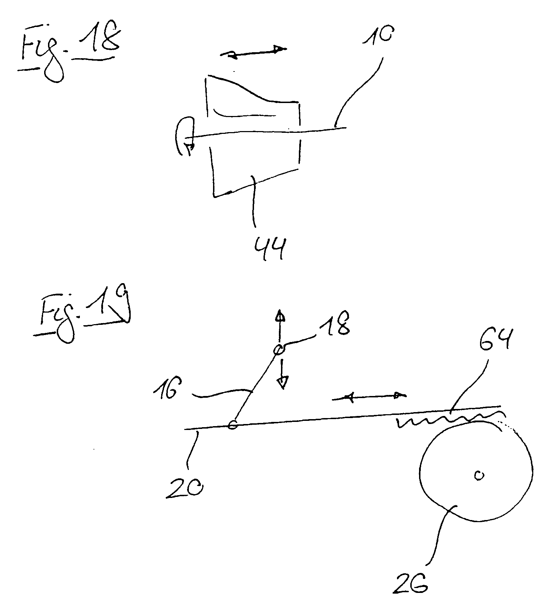

Fig. 17 verdeutlicht eine alternative Koppelung des Kurvengetriebes 12 mit dem Linearantrieb, wobei hier die Kurvenscheibe 44 direkt mit dem Schwenkhebel 16 zusammen wirkt, der für einen Linearantrieb der zweiten Koppelstange 20 sorgt. Auf die erste Koppelstange 14 wurde hierbei verzichtet. Ggf. kann am oberen freien Ende des Schwenkhebels 16 eine Rolle 62 o. dgl. vorgesehen sein, die auf dem Außenumfang der Kurvenscheibe 44 abwälzt.

Die erwähnte Übersetzungsanpassung kann auf eine der beschriebenen Weisen erfolgen, indem entweder der zweite Schwenkhebel 20 gegenüber dem fest stehenden Schwenklager 18 und der fest stehenden ersten Linearführung 32 für die erste Koppelstange 14 in seiner Distanz variiert wird. Wahlweise kann auch das Schwenklager 18 zwischen dem ersten Linearführungslager 32 und dem zweiten Linearführungslager 34 verschoben werden, wodurch sich die geänderte wirksame Hebellänge ergibt.

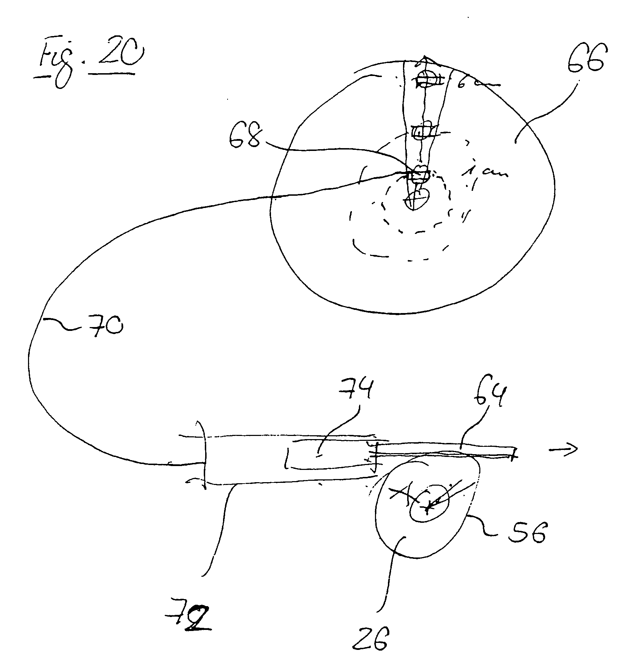

Eine weitere Alternative zur Übersetzungsanpassung kann durch eine Modifizierung des Kurvengetriebes erreicht werden. Die Kurvenscheibe 44 kann bspw. eine dreidimensionale Gestalt erhalten (vgl. Fig. 18), die eine schneckenartige Kontur vorsieht. Durch axiale Verschiebung der Kurvenscheibe 44 - diese ist nunmehr ein Kurvenkörper - auf der Antriebswelle 10 kann eine variable Übersetzung der Amplitude zur Auslenkung der ersten Koppelstange 14 erreicht werden.

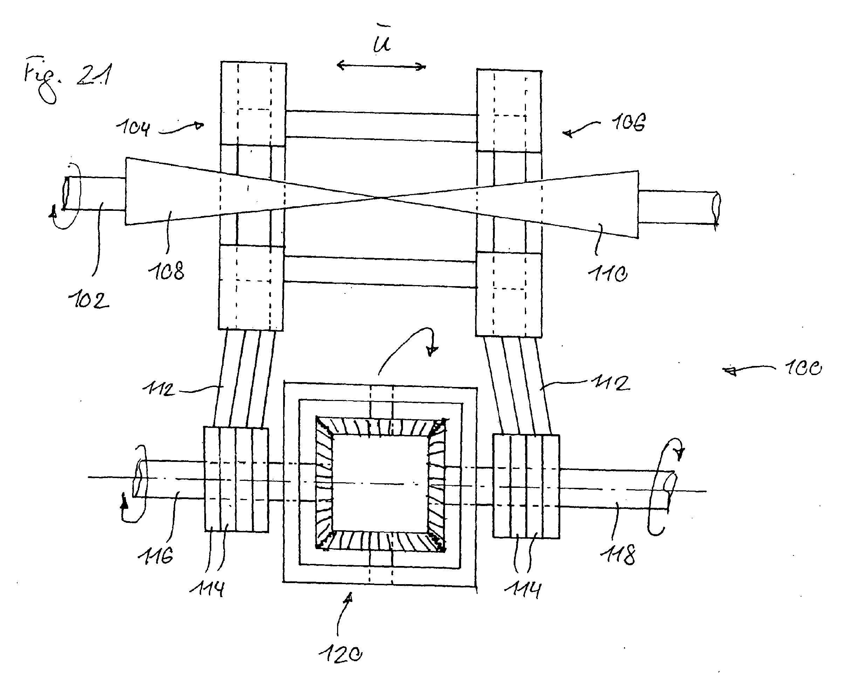

Das Zugmittel 22 kann wahlweise auch durch eine Zahnstange 64 o. dgl. ersetzt werden, wie dies anhand der Fig. 19 angedeutet ist. Diese Zahnstange 64 kann ggf. eine Verlängerung der zweiten Koppelstange 20 bilden oder mit dieser verbunden sein. Ein solches Getriebe kann nochmals deutlich kompakter ausgebildet sein. Die Übersetzungsanpassung erfolgt hierbei vorzugsweise ausschließlich über eine Verschiebung des Schwenklagers 18 zwischen erster und zweiter Koppelstange 14, 20, da die Antriebswelle 10 und die Abtriebswelle 40 normalerweise nicht verschoben werden können.

Die Anordnung gemäß Fig. 19 ermöglicht sogar einen bidirektionalen Antrieb, der durch Einbau von Umschaltfreiläufen mit jeweils umschaltbaren Sperrrichtungen realisiert werden kann. Auch diese Variante lässt sich wiederum auf beide Getriebevarianten (Fig. 1 und 2 oder Fig. 3 und 4) anwenden.

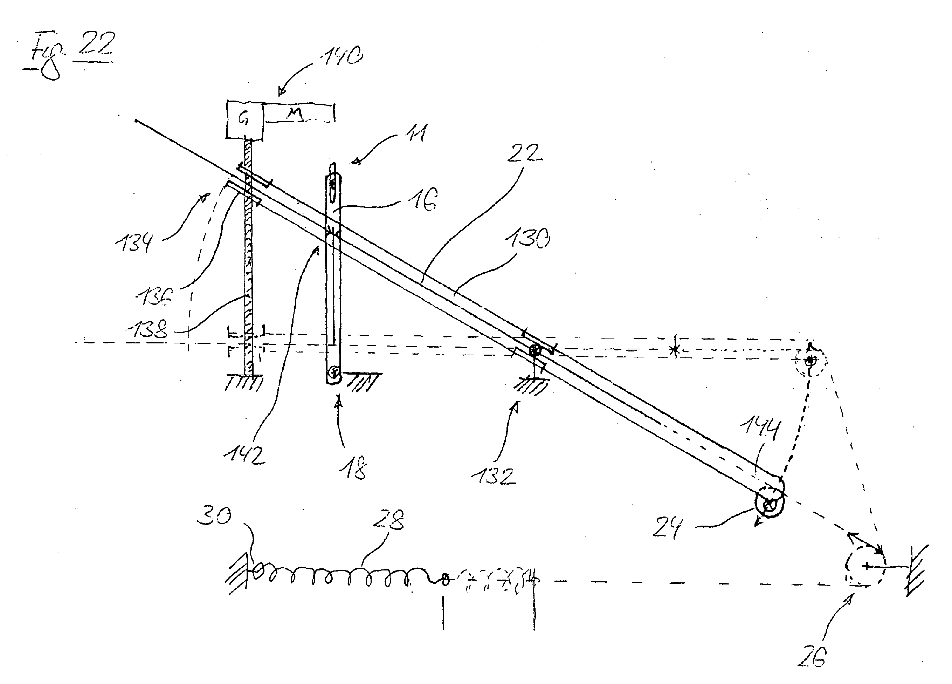

Anstatt eines Hebelantriebs kommen grundsätzlich auch andere Antriebsarten in Frage, bspw. eine hydraulische Kraftübertragung, wie dies in Fig. 20 angedeutet ist. Über einen Kurvenkörper 66, der vorzugsweise axial auf einer Antriebswelle verschiebbar ist, wird ein Linearhub auf einen Nehmerzylinder 68 übertragen, der einen hydraulischen Druck erzeugt, der über eine Hydraulikleitung 70 auf einen hydraulischen Linearantrieb 72 übertragen wird. Dieser erzeugt mittels einer linear verschiebbaren Kolbenstange 74, die mit einer Zahnstange 64 gekoppelt ist, einen Linearhub, der über die Zahnstange 64 auf das außenverzahnte Mitnehmerrad 56 des Freilaufgetriebes 26 übertragen wird. Somit kann auch mittels hydraulischer Kraftübertragung eine stufenlose Übersetzungsanpassung zweier rotierender Wellen 10 und 40 erzeugt werden.

Die Fig. 21 zeigt weiterhin eine Getriebeanordnung 100, die eine bevorzugte Möglichkeit zur Drehrichtungsumkehr darstellt, die sich mittels eines Differenziaigetriebes realisieren lässt. Die rotierende Antriebswelle 102 lässt sich in axialer Richtung verschieben, wodurch eine Übersetzungsanpassung der Getriebe 104 und 106 zustande kommt. Aufgrund der komplementären Kegelabschnitte 108 und 110 der Antriebswelle 102 wird bei einer axialen Verschiebung der Antriebswelle 102 nach rechts die Übersetzung des linken Getriebes 104 vergrößert, während die Übersetzung des rechten Getriebes 106 um den gleichen Prozentsatz verkleinert wird. Die Zugmittel 112 wirken jeweils mit mehreren Freiläufen 114 zusammen, die mit einer linken Abtriebswelle 116 bzw. mit einer rechten Abtriebswelle 118 gekoppelt sind. Linke und rechte Abtriebswellen 116 bzw. 118 sind koaxial zueinander angeordnet, jedoch nicht starr gekoppelt. Die beiden Abtriebswellen 116 und 118 sind über ein Differenzialgetriebe 120 miteinander gekoppelt, das für einen entsprechenden Ausgleich der gegensinnigen Drehbewegungen sorgen kann. Die Freiläufe 114 auf der linken Abtriebswelle 116 haben eine gegensinnige Sperrwirkung wie die Freiläufe 114 auf der rechten Abtriebswelle 118.

Wenn die Übersetzungsstufen der beiden Getriebe 104 und 106 gleich sind, ergibt sich an den beiden Abtriebswellen 116 und 118 keine Differenzgeschwindigkeit. Sie drehen mit gleicher Umdrehungszahl in gleicher Drehrichtung. Bei einer Verschiebung der Antriebswelle 102 nach links oder rechts ergeben sich Differenzen in den Übersetzungsstufen, die eine Drehrichtungsumkehr ermöglichen.

Die schematische Darstellung der Fig. 22 zeigt eine weitere Ausführungsvariante eines erfindungsgemäßen Getriebes 8, das sich in einigen Details von den beiden ersten Varianten gemäß den vorhergehenden Figuren unterscheidet. Der Aufbau ist durch geschickte Integration einiger Funktionen vereinfacht und wird im Folgenden erläutert.

Auch bei diesem Getriebe 8 gemäß Fig. 22 wird eine Oszillation eines Antriebsmechanismus 11 mittels einer Koppelverbindung in eine oszillierende Schwenkbewegung eines um ein Schwenklager 18 verschwenkbaren Schwenkhebels 16 umgesetzt wird. Mit Hilfe des Schwenkhebels 16 wird eine oszillierende Linear- oder bogenförmige Bewegung am Antriebsmechanismus 11 in eine oszillierende Schwenkbewegung um das Schwenklager 18 umgesetzt wird. Der Schwenkhebel 16 ist mit einem Verstellhebel 130 gekoppelt, mit dem die Übersetzungsänderung eingestellt werden kann. Der Verstellhebel weist ein ungefähr mittig angeordnetes Schwenklager 132 auf, um das er um einen bestimmten Winkel verschwenkt werden kann, um die gewünschte Übersetzung einzustellen. Am linken freien Ende 134 weist der Verstellhebel 130 eine drehbar gelagerte und in Längsrichtung des Hebels 130 verschiebbare Gewindemutter 136 auf, die auf einer drehbar in Festlagern gelagerte Gewindestange 138 angeordnet ist. Durch Verdrehen der Gewindestange 138, bspw. mittels einer Motor-Getriebe-Anordnung 140 kann der Verstellhebel 130 mitsamt der Gewindemutter 136 in seiner Winkellage verstellt werden, wodurch der Angriffspunkt einer Gleitlagerung 142, über welche der Schwenkhebel 16 mit dem Verstellhebel verbunden ist, ebenfalls in seiner Höhe verstellbar ist.

An der Gleitlagerung 142 ist der Schwenkhebel 16 mit einem Zugmittel 22 gekoppelt, das über eine Umlenkrolle 24 mit einem Freilaufgetriebe 26 gekoppelt ist. An einem freien Ende und in einem Abstand zum Freilaufgetriebe 26 ist das Zugmittel 22 mit einer Spannfeder 28 verbunden, die in einem gehäuse- oder rahmenfesten Lager 30 verankert ist.

Wesentlich für die Funktion des Getriebes 8 ist, dass das Zugmittel 22 lediglich an der Gleitlagerung 142 fest am Schwenkhebel 16 verankert ist, wobei die jeweilige Lage der Gleitlagerung 142 den Kraftangriffspunkt und damit die eingestellte Übersetzung definiert. Das Zugmittel 22 ist im Verstellhebel 130 so geführt, dass es beliebige Bewegungen entlang dessen Längsrichtung ausführen kann. Auch am Schwenklager 132 kann das Zugmittel 22 frei entlang gleiten. Es ist in seiner Lage dann am rechten freien Ende 144 des Verstellhebels 130 mittels der Umlenkrolle 24 geführt.

Die Lager für die Gewindestange 138, die Motor-Getriebe-Anordnung 140, das Schwenklager 18 für den Schwenkhebel 16, das Schwenklager 132 für den Verstellhebel 130, das Lager 30 für die Verankerung der Spannfeder 28 sowie das Lager für das Freilaufgetriebe 26 sind vorzugsweise an einem Rahmen, einem Gehäuse o. dgl. verankert.

Die in durchgezogener Linierung dargestellte Lage des Verstellhebels 130, bei dem das linke freie Ende 134 am oberen Ende der Gewindestange 138 anliegt, stellt eine große Übersetzungseinstellung dar, bei dem eine Verschwenkung des Schwenkhebels 16 zu einer relativ großen Auslenkung des Zugmittels 22 und damit zu einer Umdrehung des Freilaufgetriebes 26 mit relativ großem Umdrehungswinkel führt. Die in unterbrochener Linierung dargestellte, annähernd waagrechte Lage des Verstellhebels 130, bei dem das linke freie Ende 134 am unteren Ende der Gewindestange 138 anliegt, stellt eine kleine Übersetzungseinstellung dar, bei dem eine Verschwenkung des Schwenkhebels 16 zu einer sehr geringen Auslenkung des Zugmittels 22 und damit zu einer Umdrehung des Freilaufgetriebes 26 mit relativ kleinem Umdrehungswinkel führt.

Wie bei den zuvor beschriebenen Ausführungsvarianten des Getriebes 8 kann der Schwenkantrieb des Schwenkhebels 18 wahlweise auch über ein geeignetes Kurvengetriebe entsprechend der Figuren 1, 2 und 5 bis 7 oder entsprechend der Figur 18 erfolgen. Die Koppelung des Kurvengetriebes mit dem Schwenkhebel 18 kann bspw. entsprechend der Ausführungsvarianten erfolgen, die in den Figuren 1 und 2 oder in den Figuren 16 und 17 gezeigt sind.

Selbstverständlich kann die Übersetzungsänderung auch auf andere Weise als die dargestellte erfolgen, bspw. durch Verschwenken des Verstellhebels 130 mittels eines einfacheren Verstellmechanismus und anschließender Feststellung. Der Vorteil des beispielhaft dargestellten Verstellmechanismus liegt insbesondere in der selbsthemmenden Wirkung der aus Gewindemutter 136 und verdrehbarer Gewindestange 138 bestehenden Anordnung, die ein selbsttätiges Verstellen nach einer Verdrehung der Gewindestange 138 verhindert. Wahlweise kann die Verstellung der Gewindestange 138 auch auf manuellem Wege erfolgen, bspw. mittels einer Handkurbel o. dgl.

Wie bei den zuvor beschriebenen Ausführungsvarianten gilt auch bei der Variante gemäß Fig. 22, dass sich ein gleichförmiges Abtriebsmoment vorzugsweise durch parallele Anordnung von mindestens zwei derartiger Getriebe realisieren lässt, wobei die Freiläufe wahlweise auf einer gemeinsamen Abtriebswelle angeordnet sein können.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 8: Getriebe
- 10: Antriebswelle
- 11: Antriebsmechanismus
- 12: Kurvengetriebe
- 14: erste Koppelstange
- 16: Schwenkhebel
- 18: Schwenklager
- 20: zweite Koppelstange
- 22: Zugmittel
- 24: Umlenkrolle
- 26: Freilaufgetriebe
- 28: Spannfeder
- 30: Lager
- 32: erstes Linearführungslager
- 34: zweites Linearführungslager
- 36: drittes Linearführungslager
- 38: Umlenklager
- 40: Abtriebswelle
- 42: Grundplatte
- 44: Kurvenscheibe
- 46: erste Kulissenführung
- 48: Zapfen
- 50: Langloch
- 52: zweite Kulissenführung
- 54: Rolle
- 56: Mitnehmerrad
- 58: Außenkontur
- 60: Kulissenführung
- 62: Rolle
- 64: Zahnstange
- 66: Kurvenkörper
- 68: Nehmerzylinder
- 70: Hydraulikleitung
- 72: Linearantrieb
- 74: Kolbenstange
- 100: Getriebeanordnung
- 102: Antriebswelle
- 104: Getriebe
- 106: Getriebe
- 108: Kegelabschnitt
- 110: Kegelabschnitt
- 112: Zugmittel
- 114: Freilauf
- 116: linke Abtriebswelle
- 118: rechte Abtriebswelle
- 120: Differenzialgetriebe
- 130: Verstellhebel
- 132: Schwenklager
- 134: linkes freies Ende
- 136: Gewindemutter
- 138: Gewindestange
- 140: Motor-Getriebe-Anordnung
- 142: Gleitlagerung
- 144: rechtes freies Ende

## Patentansprüche

1. Getriebe (8), umfassend einen oszillierenden oder rotierenden Antrieb (10, 11), eine rotierende Abtriebswelle (40) und einen zwischen diesen Mechanismen bzw. Wellen (10, 11) angeordneten Wirkmechanismus, der eine Umsetzung der Oszillation des Antriebsmechanismus (11) bzw. einer Rotation einer Antriebswelle (10) in eine translatorische Bewegung wenigstens einer Koppelstange (14 bzw. 20) und/oder eines Schwenkhebels (16) vorsieht, die mittels eines Freilaufgetriebes (26) in eine rotatorische Bewegung der Abtriebswelle (40) umgesetzt wird.

2. Getriebe nach Anspruch 1, bei dem die Oszillationsbewegung des Antriebsmechanismus (11) bzw. die Rotation der Antriebswelle (10) in eine translatorische, oszillierende Bewegung eines Zugmittels (22) oder einer Zahnstange (64) umgesetzt wird

3. Getriebe nach Anspruch 1 oder 2, bei dem die Oszillation des Antriebsmechanismus (11) bzw. die Rotation der Antriebswelle (10) in eine Schwenkbewegung eines schwenkbar gelagerten Schwenkhebels (16) umgesetzt wird.

4. Getriebe nach einem der Ansprüche 1 bis 3, bei dem die Rotation der Antriebswelle (10) mittels eines Kurvengetriebes (12) in eine Schwenkbewegung des schwenkbar gelagerten Schwenkhebels (16) umgesetzt wird.

5. Getriebe nach einem der voranstehenden Ansprüche, bei dem die translatorische, oszillierende Bewegung des Zugmittels (22) bzw. der Zahnstange (64) in eine rotatorische Bewegung eines Freilaufgetriebes (26) übertragen wird.

6. Getriebe nach Anspruch 5, bei dem das Freilaufgetriebe (26) mit der Abtriebswelle (40) gekoppelt ist.

7. Getriebe nach einem der voranstehenden Ansprüche, bei dem eine stufenlose Übersetzungsänderung zwischen einer Antriebsdrehzahl und einer Abtriebsdrehzahl mittels einer Variation eines Hebelverhältnisses der Anlenkverbindung zwischen dem Schwenkhebel (16) und dem Zugmittel (22) bzw. der Zahnstange (64) einstellbar ist..

8. Getriebe nach einem der voranstehenden Ansprüche, bei dem eine stufenlose Übersetzungsänderung zwischen einer Antriebsdrehzahl und einer Abtriebsdrehzahl mittels einer Variation einer Auslenkung einer mit dem Zugmittel (22) bzw. der Zahnstange (64) verbundenen Koppelstange (20) realisiert ist.

9. Getriebeanordnung, umfassend wenigstens zwei Getriebe gemäß einem der voranstehenden Ansprüche, die wenigstens zwei rotierende bzw. oszillierende Antriebsmechanismen (11) aufweist, die jeweils auf ein Getriebe (8) gemäß einem der Ansprüche 1 bis 8 wirken.

10. Getriebeanordnung nach Anspruch 9, bei der die Getriebe (8) eine gemeinsame Abtriebswelle (40) aufweisen, und bei der sich die Antriebsmechanismen (11) gegensinnig bewegen, so dass die Abtriebswelle (40) ständig angetrieben wird.
